**Europäisches Patentamt**

**European Patent Office**

**Office européen des brevets**

(19)

(11) Numéro de publication : **0 479 650 A1**

# (12) DEMANDE DE BREVET EUROPEEN

(21) Numéro de dépôt : **91402572.1**

(22) Date de dépôt : **26.09.91**

(51) Int. Cl.⁵ : **F16K 31/06**

(30) Priorité : **03.10.90 FR 9012203**

(43) Date de publication de la demande :
**08.04.92 Bulletin 92/15**

(84) Etats contractants désignés :
**AT CH DE ES GB IT LI NL SE**

(71) Demandeur : **HYDRIS SOCIETE ANONYME**
**Z.I. Bellevue, B.P. 37**
**F-35220 Chateaubourg (FR)**

(72) Inventeur : **Tortellier, Christian**
**Le Ponloup, Servon sur Vilaine**
**F-35530 Noyal sur Vilaine (FR)**

(74) Mandataire : **Hoisnard, Jean-Claude et al**
**Cabinet Beau de Loménie 55, rue**
**d'Amsterdam**
**F-75008 Paris (FR)**

(54) **Clapet de sécurité pour circuit de fluide.**

(57) L'invention est relative à un clapet de sécurité muni d'un électro-aimant de commande de son ouverture.

Selon l'invention, un écrou (28) d'assemblage du solénoïde (23) de l'électro-aimant sur le corps (1) du clapet comporte un ergot interne (32) qui, lorsque le solénoïde (23) est retiré, permet de repousser directement l'organe d'obturation (14) du clapet dans sa position d'ouverture.

Une application est la réalisation d'un dispositif permettant de débloquer le clapet dans le cas d'une panne de l'électro-aimant.

FIG.1

EP 0 479 650 A1

De nombreux dispositifs élévateurs comportant des vérins à fluide de commande de l'élévation sont munis de clapets de sécurité, dont la fonction principale est double : non commandés, ces clapets de sécurité interdisent tout retour accidentel de fluide vers le réservoir ; commandés, ils permettent le passage de fluide dans les deux sens possibles d'écoulement.

Certains de ces clapets de sécurité ont une commande électrique de la position permettant le passage du fluide par ouverture du clapet. Des pannes peuvent survenir sur cette commande électrique, et/ou sur les parties mécaniques qui y sont attelées, et il a déjà été prévu de remédier, au moins temporairement à ces pannes, au moyen d'une commande volontaire d'ouverture du clapet, mise en oeuvre à la volonté d'un utilisateur.

Selon une réalisation connue, un écrou maintient l'enroulement solénoïde de l'électro de commande du passage de fluide en position assemblée sur le corps du clapet, et comporte un fond, traversé par une vis disposée en regard du noyau dudit électro-aimant. Lors d'une panne éventuelle, au cours de laquelle l'électro-aimant ne commande plus l'ouverture du clapet, il suffit de tourner ladite vis jusqu'à ce qu'elle repousse le clapet dans sa position d'ouverture.

Il a cependant été constaté que cette commande de secours d'ouverture du clapet tombait elle-même en panne, ceci étant principalement dû au fait qu'entre le filetage de la vis et le taraudage correspondant du fond de l'écrou, un jeu permanent existait et permettait l'introduction à l'intérieur du mécanisme d'humidité, qui parvenait à faire rouiller ce mécanisme, détériorant à la fois la commande de secours et la commande électro magnétique d'ouverture de clapet.

L'invention entend remédier à cet état de chose en isolant de l'humidité extérieure le mécanisme interne, ceci de manière permanente sauf éventuellement temporairement pendant la mise en oeuvre de la commande volontaire de secours d'ouverture du clapet.

L'invention est donc relative a un clapet de sécurité pour circuit de fluide comprenant: un corps de clapet comportant une partie cylindrique, qui comporte elle-même un alésage axial et un filetage d'extrémité ; un organe d'obturation, mobile par rapport audit corps de clapet, placé sur un conduit qu'il sépare en deux parties, et susceptible d'occuper sélectivement une première position, dans laquelle il obture ledit conduit, et une deuxième position, dans laquelle les deux parties dudit conduit sont en mutuelle communication ; un organe élastique de rappel de l'organe d'obturation dans sa première position ; un électro-aimant de commande électrique d'ouverture du clapet, qui comporte un enroulement solénoïde présentant un évidement axial permettant le passage de la partie cylindrique du corps de clapet, ainsi qu'un noyau attelé à l'organe d'obturation et contenu à l'intérieur dudit alésage ; un écrou borgne, qui comporte un taraudage susceptible de coopérer avec ledit filetage d'extrémité de ladite partie cylindrique du corps de clapet afin de maintenir dans sa configuration d'assemblage avec le corps de clapet ledit enroulement solénoïde, et qui comporte une face de serrage et un fond opposé à ladite face de serrage.

Selon l'invention : a) un ergot, solidaire de l'écrou, est disposé en saillie par rapport à la face intérieure du fond de l'écrou et en regard de l'alésage de ladite partie cylindrique du corps de clapet ; b) dans la configuration d'assemblage de l'enroulement solénoïde avec le corps de clapet, la face de serrage de l'écrou est en appui sur l'enroulement solénoïde, la longueur axiale dudit enroulement solénoïde étant telle que ledit ergot est alors hors d'appui de l'extrémité du noyau de l'électro-aimant, l'organe d'obturation étant en outre disposé dans sa première position ; et, c) dans une configuration dans laquelle l'enroulement solénoïde n'est pas disposé autour de ladite partie cylindrique du corps de clapet, le vissage de l'écrou sur le filetage d'extrémité de ladite partie cylindrique est susceptible de placer ledit écrou dans une position par rapport au corps de clapet, dans laquelle l'ergot est en appui sur l'extrémité du noyau de l'électro-aimant et a repoussé ledit noyau et l'organe d'obturation qui y est attelé, plaçant cet organe d'obturation dans sa deuxième position.

Les avantageuses dispositions suivantes sont en outre de préférence adoptées :

– la mise en appui de la tranche transversale d'extrémité de la partie cylindrique du corps de clapet sur la partie de la face intérieure du fond de l'écrou qui entoure l'ergot constitue la limitation du vissage de l'écrou sur le filetage d'extrémité de ladite partie cylindrique et correspond à la mise en place de l'organe d'obturation dans sa deuxième position ;

– le clapet de sécurité comporte deux joints d'étanchéité qui, dans la configuration d'assemblage du solénoïde avec le corps de clapet, sont interposés, l'un entre ledit enroulement solénoïde et le corps de clapet, l'autre entre ledit enroulement solénoïde et la face de serrage de l'écrou.

L'avantage principal de l'invention réside, naturellement, dans l'obtention d'un clapet de sécurité, muni d'une commande volontaire de secours de son ouverture, dont le fonctionnement aussi bien normal que de secours est plus sûr du fait d'une diminution importante des attaques par corrosion du mécanisme intérieur de commande.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels :

– la figure 1 est une coupe axiale d'un clapet de sécurité conforme à l'invention dans sa configuration normale de fonctionnement ;

– la figure 2 est une coupe axiale du clapet de sécurité de la figure 1, analogue à celle de la figure 1, mais dans la configuration d'ouverture dudit clapet par commande volontaire ; et,

– la figure 3 est une coupe d'une extrémité d'un vérin hydraulique munie du clapet de sécurité des figures 1 et 2.

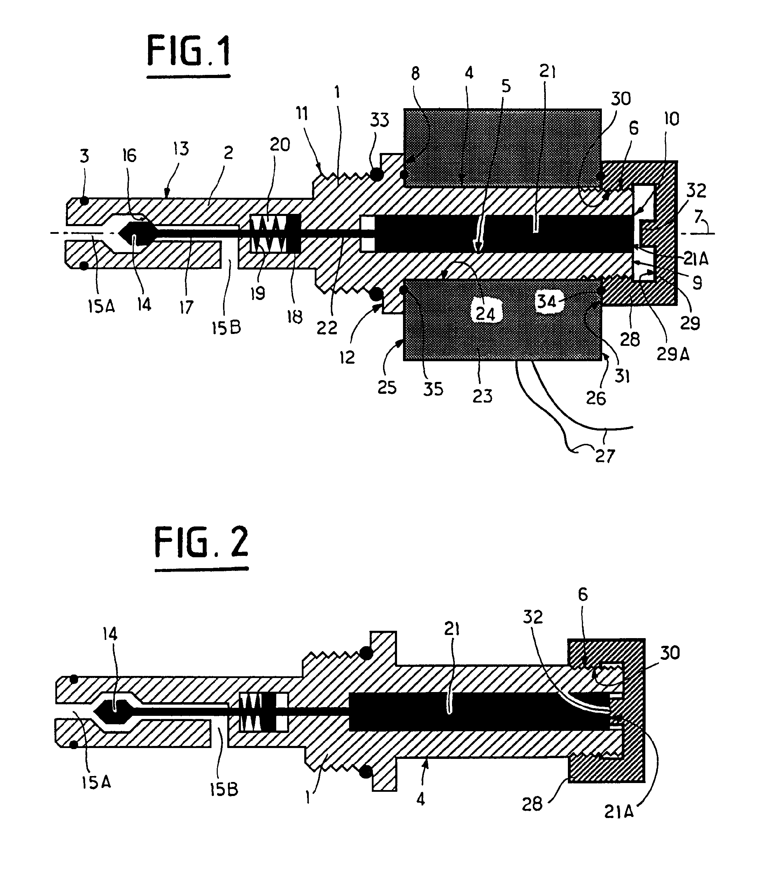

Le clapet de sécurité des figures 1 et 2 comprend :

– un corps de clapet 1, muni : d'une tête d'obturation 2 dont la face extérieure 13 est cylindrique et comporte une gorge de réception d'un joint storique d'étanchéité 3 ; disposée dans le prolongement de la tête d'obturation 2, d'une partie cylindrique 4, qui comporte un alésage coaxial 5 et un filetage d'extrémité 6, et qui est délimitée longitudinalement, parallèlement à l'axe 7 de l'alésage 5, dans le voisinage de la tête d'obturation 2 par un épaulement 8, et, à son extrémité opposée, par une tranche transversale 9 dans laquelle débouche ledit alésage 5 par un orifice 10 ; et d'un filetage 11 disposé entre la tête d'obturation 2 et un deuxième épaulement 12, parallèle à l'épaulement 8 et orienté en sens opposé ;

– un organe d'obturation 14, disposé sur un conduit interne en deux parties 15A,15B ménagé à l'intérieur de la tête d'obturation 2, et susceptible d'être placé dans une première position (figure 1), dans laquelle, étant en appui sur un siège de clapet 16 ménagé dans la tête d'obturation 2, il isole l'une de l'autre les deux parties 15A,15B du conduit interne, obture donc celui-ci, le clapet de sécurité étant alors dans une configuration dite d'obturation, ou, dans une deuxième position (figure 2), dans laquelle, étant hors d'appui du siège de clapet 16, les deux parties 15A,15B du conduit interne sont en mutuelle communication ;

– une tige de liaison 17, solidaire de l'organe d'obturation 14, munie d'une bride 18 ;

– un organe élastique de rappel 19, ici un ressort, contenu dans un logement 20 ménagé dans le corps de clapet 1, et interposé entre ledit corps de clapet 1 et la bride 18, son effet tendant à rappeler l'organe d'obturation 14 vers sa première position, de la figure 1, ou à l'y maintenir ;

– un électro-aimant comprenant un noyau 21, contenu à l'intérieur de l'alésage 5 et y étant monté coulissant parallèlement à l'axe 7, en étant relié à la bride 18 par une tige 22 ; un enroulement solénoïde 23 présentant un évidement axial 24 permettant le passage de la partie cylindrique 4

du corps de clapet et délimité par deux faces transversales 25,26 d'extrémité ; les fils 27 de raccordement de l'enroulement solénoïde à une source d'énergie électrique ;

– un écrou 28, qui, comporte : un fond 29 le rendant borgne ; un taraudage 30 susceptible de coopérer avec le filetage d'extrémité 6 de la partie cylindrique 4 du corps de clapet ; une face transversale externe de serrage 31, opposée au fond 29 ; et un ergot 32, disposé coaxialement à l'axe 7, en regard de l'alésage 5 à l'intérieur duquel il est susceptible de pénétrer de manière à appuyer sur l'extrémité 21A du noyau 21, et en saillie par rapport à la face interne adjacente 29A du fond 29 ;

– un joint d'étanchéité 33 reçu dans une gorge du corps de clapet 1, adjacent à l'épaulement 12.

Dans la configuration de la figure 1, l'enroulement solénoïde 23 est traversé par la partie cylindrique 4 du corps de clapet et est fixé sur ledit corps de clapet par mise en appui de la face de serrage 31 de l'écrou 28 sur l'une (26) de ses faces transversales avec interposition d'un joint d'étanchéité 34, et, par mise en appui de son autre face transversale 25 sur l'épaulement 8 avec interposition d'un joint d'étanchéité 35. La longueur de l'enroulement solénoïde 23 (distance entre les faces 25 et 26) est telle que, après serrage de l'écrou 28, l'ergot 32 reste hors d'appui de l'extrémité 21A du noyau 21, l'organe élastique de rappel 19 étant seul à agir sur l'organe d'obturation 14 et le maintenant dans sa première position d'obturation du conduit 15A-15B.

Dans la configuration de la figure 2, il a été supposé qu'un incident avait été constaté dans le fonctionnement de la commande du clapet de sécurité par l'intermédiaire de l'électro-aimant. Après dévissage de l'écrou 28, l'enroulement solénoïde 23 a été enlevé, puis l'écrou 23 a été revissé jusqu'à ce que l'ergot 32 appuie sur l'extrémité 21A du noyau 21 et repousse celui-ci de manière à placer l'organe d'obturation 14 dans sa deuxième position de mise en communication des deux parties 15A,15B du conduit interne. A noter, dans cette configuration, les points suivants :

– la proéminence de l'ergot 32 a été prévue de manière que la mise en place de l'organe d'obturation 14 dans sa deuxième position soit réalisée lorsque la face interne 29A du fond 29 de l'écrou est en appui sur la tranche transversale d'extrémité 9 de la partie cylindrique 4 du corps de clapet, ce qui constitue une disposition commode permettant à l'utilisateur de savoir à partir de quel moment l'organe d'obturation est effectivement placé dans sa deuxième position ;

– aucun joint d'étanchéité n'a été prévu entre l'écrou 28 et le corps de clapet, ce qui, a priori, rend possible l'introduction d'humidité à l'intérieur du mécanisme, notamment à l'intérieur de l'alésage 5 ;

– il sera vu ultérieurement que cet inconvénient n'est qu'apparent ; il serait de toute façon également conforme à l'invention de disposer un joint d'étanchéité entre l'écrou 28 et le corps de clapet.

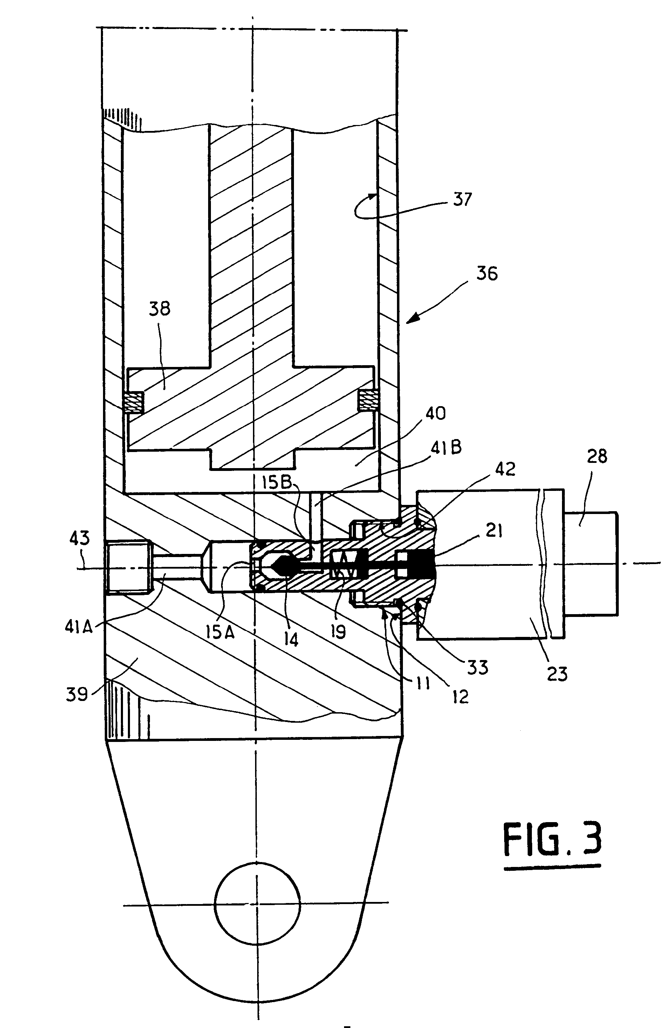

La figure 3 représente le montage du clapet de sécurité sur un vérin 36 constitué par :

– un cylindre 37 ;

– un piston 38, monté coulissant à l'intérieur du cylindre 37 et définissant avec le fond 39 dudit cylindre une chambre de travail 40 ;

– un conduit interne audit fond 39 comprend deux parties 41A,41B qui, le clapet de sécurité étant mis en place sur le fond 39 par vissage du filetage 11 dans un taraudage 42 ménagé dans le fond 39, communiquent, la partie 41A avec la partie 15A de clapet de sécurité et avec un conduit externe 43, et, la partie 41B avec la partie 15B du clapet de sécurité et avec la chambre de travail 40.

Le joint d'étanchéité 33 est interposé entre le fond 39 du cylindre et l'épaulement 12 du corps de clapet.

Dans la configuration de la figure 3, le clapet de sécurité est muni de son électro-aimant, y compris de l'enroulement solénoïde 23, susceptible d'en commander l'ouverture, et donc la mise en communication des parties 15A,15B de son conduit interne, par alimentation en énergie électrique de l'enroulement solénoïde 23. Ainsi, la chambre de travail 40 peut être mise en communication avec le conduit 43 et être, soit alimentée en fluide sous pression, soit être mise en communication avec un réservoir de décharge de fluide. Lorsque la chambre de travail 40 doit être isolée du conduit externe 43, la cessation de l'alimentation en énergie électrique de l'enroulement solénoïde 23 supprime la force qu'il développait et qui était antagoniste et prépondérante par rapport à la force de rappel de l'organe élastique 19 : l'organe élastique 19 agit seul et place l'organe d'obturation 14 dans sa première position d'obturation étanche du conduit interne 15A-15B.

S'il survient un incident, tel qu'une cessation du fonctionnement de la commande électromagnétique d'ouverture de clapet, l'utilisateur a la possibilité de modifier la configuration du clapet de sécurité, représentée sur la figure 1, pour adopter la configuration de la figure 2. A sa volonté, il a rétabli la communication entre les parties 15A et 15B du conduit interne du clapet de sécurité, ce qui rend de nouveau possible la communication de la chambre de travail 40 du vérin 36 avec le conduit externe 43 et réalise le déblocage de l'organe commandé par ce vérin : déblocage d'un hayon élévateur en position de manutention d'une charge, ou analogue, par exemple.

Dans la configuration des figures 1 et 3, le clapet de sécurité, d'une part, est monté avec étanchéité (joint 33) sur le vérin 36, d'autre part, est monté lui-même de manière étanche (joints 34,35). Aucune humidité n'est susceptible d'attaquer par corrosion le mécanisme interne du clapet de sécurité, ce qui élimine tout risque de détérioration de ce fait, et réduit les risques de pannes, ceci de manière permanente, alors que, selon certaines dispositions antérieures, l'humidité pouvait pénétrer en permanence à l'intérieur du mécanisme par le jeu non étanche qui existait entre le filetage de la vis de déblocage de l'organe d'obturation et le taraudage corrrespondant du corps de clapet.

Dans la configuration de la figure 2, le risque d'introduction d'humidité entre le filetage 6 et le taraudage 30 de l'écrou 28 existe effectivement. Il ne faut cependant pas oublier que cette configuration est exceptionnelle et temporaire : elle n'est choisie que lorsque la commande normale (électromagnétique) d'ouverture du clapet de sécurité tombe en panne, ce qui est en principe rare, et ce qui est d'ailleurs encore plus rare avec le clapet de sécurité décrit. De plus, cette configuration de la figure 2 n'est que temporaire : le temps de la réparation de la commande électromagnétique. Pendant ces périodes courtes et exceptionnelles, l'humidité qui pénètre éventuellement n'a pas la possibilité d'endommager le mécanisme du clapet, car son attaque corrosive n'est pas permanente.

L'invention n'est pas limitée aux réalisations décrites, mais en couvre au contraire toutes les variantes qui pourraient lui être apportées sans sortir de son cadre, ni de son esprit.

## Revendications

1. Clapet de sécurité pour circuit de fluide comprenant :

   – un corps de clapet (1) comportant une partie cylindrique (4), qui comporte elle-même un alésage axial (5) et un filetage d'extrémité (6) ;

   – un organe d'obturation (14), mobile par rapport audit corps de clapet (1), placé sur un conduit (15A-15B) qu'il sépare en deux parties (15A,15B), et susceptible d'occuper sélectivement une première position, dans laquelle il obture ledit conduit, et une deuxième position, dans laquelle les deux parties dudit conduit sont en mutuelle communication ;

   – un organe élastique (19) de rappel de l'organe d'obturation (14) dans sa première position ;

   – un électro-aimant de commande électrique d'ouverture du clapet, qui comporte un enroulement solénoïde (23) présentant un évidement axial (24) permettant le passage de la partie cylindrique (4) du corps de clapet (1), ainsi qu'un noyau (21) attelé (22-17) à l'organe d'obturation (14) et contenu à l'intérieur dudit alésage (5) ;

– un écrou borgne (28), qui comporte un taraudage (30) susceptible de coopérer avec ledit filetage d'extrémité (6) de ladite partie cylindrique (4) du corps de clapet afin de maintenir dans sa configuration d'assemblage avec le corps de clapet (1) ledit enroulement solénoïde (23), et qui comporte une face de serrage (31) et un fond (29) opposé à ladite face de serrage ;

caractérisé en ce que :

a) un ergot (32), solidaire de l'écrou (28), est disposé en saillie par rapport à la face intérieure (29A) du fond (29) de l'écrou et en regard de l'alésage (5) de ladite partie cylindrique (4) du corps de clapet (1) ;

b) dans la configuration d'assemblage de l'enroulement solénoïde avec le corps de clapet (figure 1), la face de serrage (31) de l'écrou (28) est en appui sur l'enroulement solénoïde (23), la longueur axiale dudit enroulement solénoïde étant telle que ledit ergot (32) est alors hors d'appui de l'extrémité (21A) du noyau de l'électro-aimant, l'organe d'obturation (14) étant en outre disposé dans sa première position ; et,

c) dans une configuration dans laquelle l'enroulement solénoïde n'est pas disposé autour de ladite partie cylindrique du corps de clapet (figure 2), le vissage de l'écrou (28) sur le filetage d'extrémité (6) de ladite partie cylindrique (4) est susceptible de placer ledit écrou dans une position par rapport au corps de clapet, dans laquelle l'ergot (32) est en appui sur l'extrémité (21A) du noyau (21) de l'électro-aimant et a repoussé ledit noyau (21) et l'organe d'obturation (14) qui y est attelé, plaçant cet organe d'obturation dans sa deuxième position.

2. Clapet de sécurité selon la revendication 1, caractérisé en ce que la mise en appui de la tranche transversale d'extrémité (9) de la partie cylindrique (4) du corps de clapet (1) sur la partie (29A) de la face intérieure du fond (29) de l'écrou (28), qui entoure l'ergot, constitue la limitation du vissage de l'écrou sur le filetage d'extrémité (6) de ladite partie cylindrique (4) et correspond à la mise en place de l'organe d'obturation (14) dans sa deuxième position (figure 2).

3. Clapet de sécurité selon l'une quelconque des revendications 1 et 2, caractérisé en ce qu'il comporte deux joints d'étanchéité (34,35) qui, dans la configuration d'assemblage du solénoïde avec le corps de clapet (figure 1), sont interposés, l'un (35) entre ledit enroulement solénoïde (23) et le corps de clapet (1), l'autre (34) entre ledit enroulement solénoïde (23) et la face de serrage (31) de l'écrou (28).

## FIG.1

## FIG. 2

FIG. 3

Office européen
des brevets

**RAPPORT DE RECHERCHE EUROPEENNE**

Numero de la demande

EP 91 40 2572

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A- 853 469 (BAIRD) <br> * Page 2, lignes 80-123 * <br> --- | 1 | F 16 K 31/06 |
| A | FR-A-1 257 143 (LA REGULATION AUTOMATIQUE SA) <br> * Entier * <br> ----- | 1 | |

|  | | | DOMAINES TECHNIQUES RECHERCHES (Int. Cl.5) |
|---|---|---|---|
| | | | F 16 K |

Le présent rapport a été établi pour toutes les revendications

| Lieu de la recherche | Date d'achèvement de la recherche | Examinateur |
|---|---|---|
| LA HAYE | 19-12-1991 | VERELST P.E.J. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
...........................................................................
& : membre de la même famille, document correspondant

EPO FORM 1503 03.82 (P0402)